# EUROPÄISCHE PATENTSCHRIFT

(11) **EP 0 636 522 B1**
(45) Veröffentlichungstag und Bekanntmachung des Hinweises auf die Patenterteilung: **21.05.1997**
(21) Anmeldenummer: 94111466.2
(22) Anmeldetag: 22.07.1994
(51) Int. Cl.: B60R 22/20

(54) **Vorrichtung zur Höhenverstellung eines Sicherheitsgurtbeschlages**
Device for the height adjustment of a safety belt fitting
Dispositif de réglage en hauteur d'une ferrure de ceinture de sécurité

(30) Priorität: 30.07.1993 DE 4325662
(43) Veröffentlichungstag der Anmeldung: 01.02.1995
(73) Patentinhaber: TRW Occupant Restraint Systems GmbH, 73553 Alfdorf (DE)
(72) Erfinder: Petzi, Jürgen, D-73312 Geislingen (DE); Bühr, Erwin, D-73527 Schwäbisch Gmünd (DE)
(74) Vertreter: Degwert, Hartmut, Dipl.-Phys.

(56) Entgegenhaltungen:
- EP-A- 0 370 402
- EP-A- 0 376 320
- FR-A- 2 664 548
- FR-A- 2 664 549

## Beschreibung

Die Erfindung betrifft eine Vorrichtung zur Höhenverstellung eines Sicherheitsgurtbeschlages in Fahrzeugen, mit einer zur Befestigung am Fahrzeug eingerichteten lastaufnehmenden Führungsschiene, die mehrere in ihrer Längsrichtung beabstandete Rastelemente aufweist, einem in dieser Führungsschiene verschiebbar aufgenommenen Träger, an dem der Sicherheitsgurtbeschlag befestigt ist, einem an den Rastelementen selektiv verrastbaren Riegel, der an dem Träger gelagert ist, und einem Löseelement, durch dessen Betätigung der Riegel von dem jeweiligen Rastelement lösbar ist. Ein Beispiel für eine solche Vorrichtung ist aus der gattungsbildenden FR-A-2 664 549 bekannt.

Derartige Vorrichtungen zur Höhenverstellung eines Sicherheitsgurtbeschlages sind in zahlreichen Ausführungen bekannt. Sie ermöglichen eine Anpassung der Höhe des Sicherheitsgurtbeschlages, im allgemeinen des Umlenkbeschlages bei einem Dreipunkt-Sicherheitsgurt, an die Körpergröße des Fahrzeuginsassen. Mittels eines beispielsweise manuell betätigbaren Löseelementes wird der Riegel der Vorrichtung außer Eingriff mit dem jeweiligen Rastelement der Führungsschiene bewegt, woraufhin der Träger entlang der Führungsschiene verschoben werden kann, bis der Riegel in der gewünschten Höhe an einem Rastelement verrastet wird. Wenn der Vorgang nicht bis zur Verrastung ausgeführt wird, kann der Riegel in einer Zwischenstellung zwischen zwei Rastelementen verbleiben. Dieser Zustand ist unkritisch, wenn gewährleistet ist, daß der Riegel bei einer Abwärtsbewegung des Trägers am nächsttieferen Rastelement verrastet. Eine solche Bewegung des Trägers tritt bei einem Dreipunkt-Sicherheitsgurtsystem durch die nach unten gerichtete Kraftkomponente am Umlenkbeschlag auf, wenn der Sicherheitsgurt belastet wird. Wenn aber das Sicherheitsgurtsystem mit einem Gurtstraffer ausgestattet ist, der beispielsweise am Gurtaufroller oder am Gurtschloß angreift, so kann die am Umlenkbeschlag auftretende, nach unten gerichtete Kraftkomponente extrem hohe Werte annehmen, weil die Gurtstraffung innerhalb weniger Millisekunden abgeschlossen sein muß und entsprechend hohe Zugspannungen in das Gurtband eingeleitet werden. Durch die am Umlenkbeschlag auftretende, nach unten gerichtete Beschleunigung wird der Träger mit dem Riegel so stark beschleunigt, daß der Riegel, wenn er sich in einer Zwischenstellung zwischen zwei Rastelementen befand, über das nächsttiefere Rastelement hinausbewegt werden kann und erst an einem tieferen Rastelement oder gar am Ende des Verstellweges blockiert wird. Der Umlenkbeschlag befindet sich dann nicht mehr in der optimalen Höhe, und die Wirkung des Gurtstraffers geht teilweise verloren.

Bei der aus der gattungsbildenden FR-A-2 664 549 bekannten Vorrichtung zur Höhenverstellung ist zusätzlich zu dem selektiv verrastbaren Riegel ein Sperrelement vorgesehen, das bezüglich seines Schwerpunktes auf der von der Führungsschiene abgewandten Seite schwenkbar gelagert ist. Wenn auf den Träger eine relativ zum Fahrzeug nach unten gerichtete hohe Beschleunigung einwirkt, beispielsweise bei einer Gurtstraffung, wird das Sperrelement aufgrund seiner Massenträgheit zur Schiene hin beaufschlagt, so daß es an dem nächstgelegenen Rastelement angreift.

Durch die Erfindung wird eine Vorrichtung zur Höhenverstellung eines Sicherheitsgurtbeschlages in Fahrzeugen zur Verfügung gestellt, durch die mit einfachen Mitteln gewährleistet ist, daß der Riegel bei einer Abwärtsbewegung des Trägers stets an dem nächsttieferen Rastelement blockiert wird. Gemäß der Erfindung ist vorgesehen, daß der Riegel an dem Träger um eine zumindest annähernd horizontale Schwenkachse schwenkbar gelagert ist und sein Schwerpunkt in Bezug auf eine durch die Schwenkachse verlaufende, zu der Führungsschiene parallele Ebene zur Seite der Führungsschiene hin versetzt ist, daß der Riegel durch Federkraft in Richtung zu den Rastelementen hin belastet ist und daß das Löseelement durch einen an dem Träger schwenkbar gelagerten Betätigungshebel gebildet ist, der bei Betätigung an dem Riegel angreift und unter der Wirkung einer Beschleunigung, durch die der Riegel in Richtung der Rastelemente verschwenkt wird, sich von dem Riegel löst. Durch diese Maßnahmen wird dem Riegel in der Beschleunigungsphase der Abwärtsbewegung des Trägers eine Zwangsverschwenkung aufgrund seiner eigenen Massenträgheit in Richtung zum Boden der Führungsschiene hin aufgegeben. Durch die Versetzung des Schwerpunktes in bezug auf die durch die Schwenkachse verlaufende, senkrechte Ebene entsteht ein Hebel, an dem die Trägheitskraft des Riegels angreift und ein Drehmoment erzeugt, welches die Zwangsverschwenkung des Riegels in die Eingriffsposition bewirkt. Je größer die am Träger und am Riegel auftretende Beschleunigung ist, desto größer ist auch das die Zwangsverschwenkung bewirkende Drehmoment. Es ist daher leicht möglich, den Riegel so zu gestalten, daß auch bei den höchsten zu erwartenden Beschleunigungen eine ausreichend schnelle Zwangsverschwenkung in die Eingriffsposition erfolgt. Durch die Verwendung des Riegels für ein Verrasten des Trägers sowohl nach einer manuellen Verstellung als auch nach einer Verstellung bei einer Gurtstraffung ergibt sich ein besonders einfacher Aufbau. Da sich der schwenkbar gelagerte Betätigungshebel bei derselben Beschleunigung, die den Riegel in Richtung der Rastelemente verschwenkt, von diesem löst, kann es zu keiner Beeinträchtigung des beschleunigungsbedingten Verschwenkens des Riegels kommen, so daß jederzeit ein sicheres Verrasten des Trägers gewährleistet ist. Da der Riegel durch Federkraft in Richtung zu den Rastelementen hin belastet ist, müssen nur kurze Wege zwischen Rastposition und Lösestellung überwunden werden.

Bei einer vorteilhaften Weiterbildung ragen die Rastelemente aus der flachen Bodenwandung der Führungsschiene in deren Innenraum hinein, und der Riegel wird durch eine Feder in Anlage an der Innenseite der Bodenwandung der Führungsschiene gehalten. Durch diese Maßnahme ist gewährleistet, daß der Riegel, sofern er nicht mit seiner Rastkante an einem aus der Bodenwandung der Führungsschiene herausragenden Rastelement anliegt, bei einer Abwärtsbewegung des Trägers auch ohne Verschwenkung auf das nächsttiefere Rastelement trifft.

Eine besonders einfache und nur eine geringe Bautiefe erfordernde Ausbildung der Vorrichtung entsteht gemäß einer vorteilhaften Weiterbildung dadurch, daß der Riegel einen allgemein L-förmigen Teil aufweist, der am freien Ende seines langen Schenkels an dem Träger schwenkbar abgestützt ist und am Ende seines zum Boden der Führungsschiene hin abgebogenen kurzen Schenkels einen schräg zum Boden der Führungsschiene hin abgebogenen Rastansatz trägt, an dessen freiem Ende eine Rastkante gebildet ist.

Weitere Vorteile und Merkmale der Erfindung ergeben sich aus der folgenden Beschreibung und aus der Zeichnung, auf die Bezug genommen wird. In der Zeichnung zeigen:

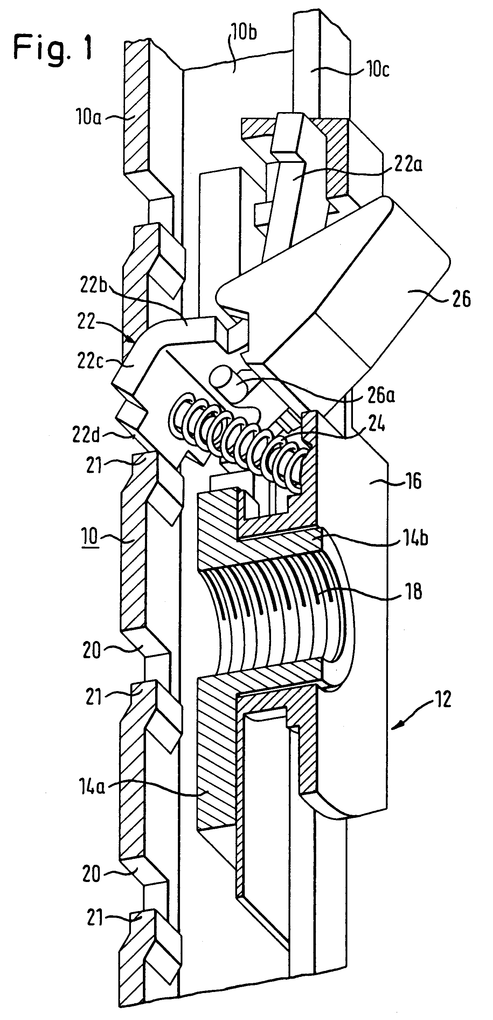

- Fig. 1: eine aufgeschnittene, perspektivische Teilansicht einer Ausführungsform der Vorrichtung;
- Fig. 2: einen Längsschnitt der Vorrichtung in einer zur Bodenwandung der Führungsschiene senkrechten Ebene, wobei der Riegel in einer Raststellung gezeigt ist;
- Fig. 3: die gleiche Schnittansicht, wobei der Riegel jedoch in einer Zwischenstellung zwischen zwei Rastelementen dargestellt ist; und
- Fig. 4: eine analoge Schnittansicht, bei welcher der Riegel sich mit seiner Rastkante an einem Rastelement abstützt.

Eine aus einem gebogenen und gestanzten Blechteil gebildete Führungsschiene 10 ist zur Verankerung am B-Pfosten eines Fahrzeugs eingerichtet. Sie besitzt eine flache Bodenwandung 10a und senkrecht von dieser abgebogene Seitenwandungen 10b, von denen in der Zeichnung nur eine dargestellt ist, mit rechtwinklig sowie parallel zur Bodenwandung 10a abgebogenen Flügeln 10c, zwischen denen ein Spalt gebildet ist. In der Führungsschiene 10 ist ein Träger 12 zur Befestigung eines (nicht dargestellten) Umlenkbeschlages eines Sicherheitsgurtsystemes in Längsrichtung verschiebbar aufgenommen. Der Träger 12 ist aus einer Platte 14a mit angeformter Buchse 14b und einem Führungsteil 16 zusammengesetzt, welches die Flügel 10c umgreift und von der Buchse 14b durchsetzt wird. Die Buchse 14b ist mit einer Gewindebohrung 18 zum Einschrauben eines Schraubbolzens versehen, der zur Befestigung des Umlenkbeschlages dient.

Die Führungsschiene 10 ist mit einer Reihe von rechteckigen, aus der Bodenwandung 10a ausgestanzten Öffnungen 20 versehen, die in Längsrichtung gleichmäßig beabstandet sind. Die in Einbauposition der Vorrichtung untere Kante jeder Öffnung 20 ist ausgeprägt und ragt als Rastelement 21 in den Innenraum der Führungsschiene 10 hinein. An dem Träger 12 ist ein Riegel 22 schwenkbar gelagert. Dieser Riegel 22 besitzt einen allgemein L-förmigen Teil mit einem langen Schenkel 22a, dessen freies Ende in einer Nut 23 im Inneren des Führungsteils 16 schwenkbar um eine Achse A abgestützt ist, und einen kurzen Schenkel 22b, der zur Bodenwandung 10a der Führungsschiene 10 hin abgebogen ist und einen schräg zum Boden der Führungsschiene 10 abgebogenen Rastansatz 22c trägt, an dessen freiem Ende eine Rastkante 22d gebildet ist. Durch eine Druckfeder 24, die sich zwischen dem Rastansatz 22c und dem Führungsteil 16 abstützt, wird der Riegel 22 in Richtung zum Boden der Führungsschiene 10 hin beaufschlagt.

An dem Träger 12 ist ferner ein Löseelement in Form eines Betätigungshebels 26 schwenkbar gelagert. Der Betätigungshebel 26 hintergreift mit zwei Zapfen 26a den Riegel 22 an seinem langen Schenkel 22a in der Nähe des Übergangs zum kurzen Schenkel 22b. Durch beispielsweise manuelles Verschwenken des Betätigungshebels 26 in Abwärtsrichtung wird der Riegel 22 entgegen dem Uhrzeigersinn und entgegen der Kraft der Druckfeder 24 verschwenkt.

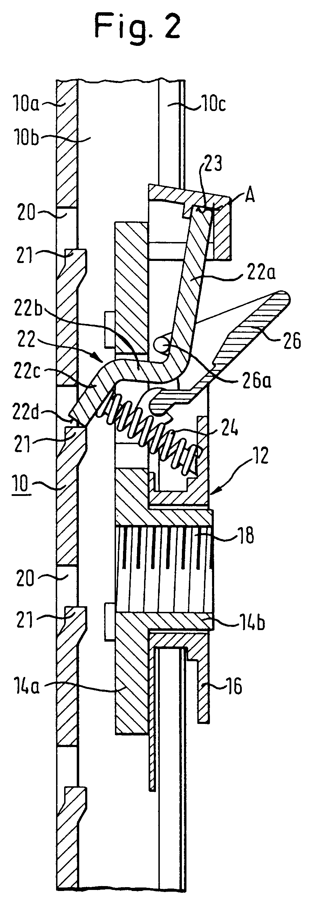

Fig. 2 zeigt den Riegel 22 in einer Raststellung; die Rastkante 22d sitzt auf einem der Rastelemente 21 auf.

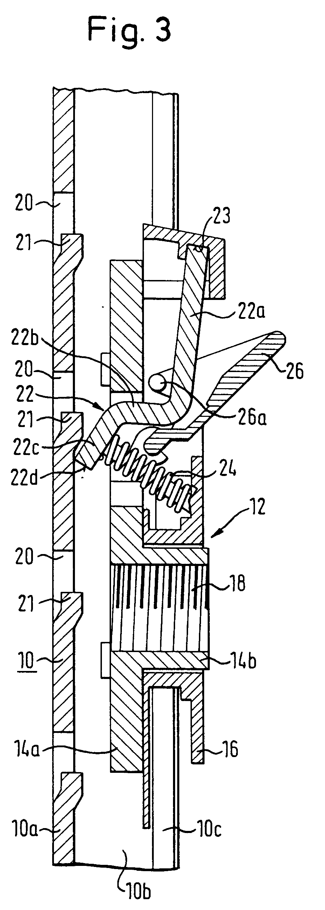

In Fig. 3 ist der Riegel 22 in einer Zwischenstellung zwischen zwei Rastelementen 21 gezeigt, wobei er unmittelbar unterhalb eines Rastelements 21 mit seiner Rastkante 22d an der Innenseite der flachen Bodenwandung 10a der Führungsschiene 10 anliegt. Wenn in einem solchen Zustand eine Abwärtsbewegung des Trägers 12 in der Führungsschiene 10 erfolgt, ist gewährleistet, daß die Rastkante 22d des Riegels 22 auf das nächsttiefere Rastelement 21 trifft, denn der Riegel 22 muß nicht erst in eine Eingriffsposition verschwenkt werden.

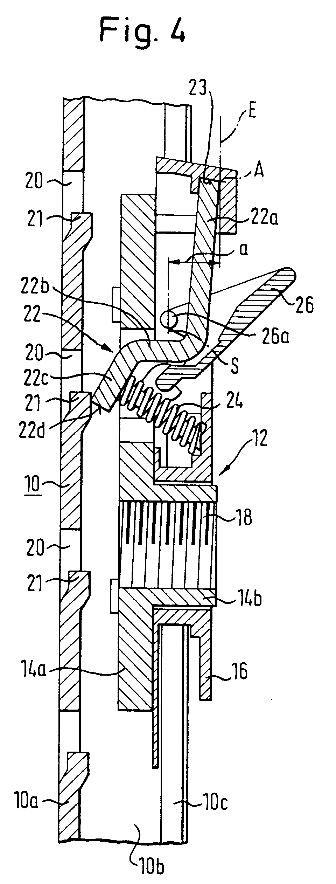

Bei dem in Fig. 4 gezeigten Zustand befindet sich hingegen der Riegel 22 in einer Zwischenstellung, bei welcher seine Rastkante 22d unmittelbar unterhalb der entsprechenden Kante eines Rastelementes 21 an dessen Innenseite abgestützt ist. Um von dieser Stellung ausgehend auf das nächsttiefere Rastelement zu treffen, muß der Riegel 22 im Uhrzeigersinn bzw. zur Bodenwandung der Führungsschiene 10 hin verschwenkt werden. Um zu gewährleisten, daß diese Schwenkbewegung auch bei einer plötzlichen Abwärtsbewegung des Trägers 12 aufgrund einer Gurtstraffung ausreichend schnell erfolgt, ist der Schwerpunkt S des Riegels 22 gegenüber einer Ebene E, die durch die Schwenkachse A und parallel zur Bodenwandung der Führungsschiene 10 verläuft, in Richtung zu dieser Bodenwandung hin um ein Maß a versetzt. Dieses Maß a entspricht einem Hebel, mit dem die im Schwerpunkt S wirksame Trägheitskraft des Riegels 22 ein Drehmoment um die Schwenkachse A erzeugt, durch welches dem Riegel 22 die erforderliche Schwenkbewegung in die Eingriffsposition mit dem nächsttieferen Rastelement 21 aufgezwungen wird, wenn eine hohe, abwärtsgerichtete Beschleunigung am Träger 12 und am Riegel 22 auftritt. Diese Schwenkbewegung, die dem Riegel 22 aufgrund seiner eigenen Massenträgheit aufgezwungen wird, wird durch den Betätigungshebel 26 nicht behindert, da dieser unter der Wirkung derselben Beschleunigung in seiner angehobenen Stellung gehalten wird, so daß die Zapfen 26a außer Eingriff mit dem Riegel 22 verbleiben.

## Patentansprüche

1. Vorrichtung zur Höhenverstellung eines Sicherheitsgurtbeschlages in Fahrzeugen, mit einer zur Befestigung am Fahrzeug eingerichteten lastaufnehmenden Führungsschiene (10), die mehrere in ihrer Längsrichtung beabstandete Rastelemente (21) aufweist, einem in dieser Führungsschiene (10) verschiebbar aufgenommenen Träger (12), an dem der Sicherheitsgurtbeschlag befestigt ist, einem an den Rastelementen (21) selektiv verrastbaren Riegel (22), der an dem Träger gelagert ist, und einem Löseelement (26), durch dessen Betätigung der Riegel (22) von dem jeweiligen Rastelement (21) lösbar ist, dadurch gekennzeichnet, daß der Riegel (22) an dem Träger (12) um eine zumindest annähernd horizontale Schwenkachse (A) schwenkbar gelagert ist und sein Schwerpunkt (S) in Bezug auf eine durch die Schwenkachse (A) verlaufende, zu der Führungsschiene (10) parallele Ebene (E) zur Seite der Führungsschiene (10) hin versetzt ist, daß der Riegel (22) durch Federkraft (24) in Richtung zu den Rastelementen (21) hin belastet ist und daß das Löseelement durch einen an dem Träger (12) schwenkbar gelagerten Betätigungshebel (26) gebildet ist, der bei Betätigung an dem Riegel (22) angreift und unter der Wirkung einer Beschleunigung, durch die der Riegel (22) in Richtung der Rastelemente (21) verschwenkt wird, sich von dem Riegel (22) löst.

2. Vorrichtung nach Anspruch 1, dadurch gekennzeichnet, daß der Riegel (22) mit seinem von der Führungsschiene (10) abgewandten Ende an dem Träger (12) schwenkbar abgestützt ist.

3. Vorrichtung nach einem der Ansprüche 1 und 2, dadurch gekennzeichnet, daß die Rastelemente (21) aus der flachen Bodenwandung der Führungsschiene (10) in deren Innenraum ragen und der Riegel (22) durch die Federkraft (24) in Anlage an der Innenseite der Bodenwandung der Führungsschiene (10) gehalten ist.

4. Vorrichtung nach einem der Ansprüche 2 und 3, dadurch gekennzeichnet, daß der Riegel (22) einen allgemein L-förmigen Teil aufweist, der am freien Ende seines langen Schenkels (22a) an dem Träger (12) abgestützt ist und am Ende seines zum Boden der Führungsschiene (10) hin abgebogenen kurzen Schenkels (22b) einen schräg zum Boden der Führungsschiene (10) abgebogenen Rastansatz (22c) trägt, an dessen freiem Ende eine Rastkante (22d) gebildet ist.

## Claims

1. A device for height adjustment of a vehicular seat belt fitting including a load-bearing guide rail (10) equipped for securing to the vehicle, this guide rail having a plurality of latching members (21) spaced in its longitudinal direction and in which a carrier (12) is shiftably mounted, to which the seat belt fitting is secured, a latch (22) selectively latchable to the latching members (21), this latch being mounted on the carrier, and a release member (26) by the actuation of which the latch (22) is releasable from the corresponding latching member (21), characterized in that the latch (22) is mounted on the carrier (12) so that it can be swivelled about a swivel axis (A) which is at least more or less horizontal and its center of gravity (S) is displaced towards the side of the guide rail (10) relatively to a plane (E) oriented parallel to the guide rail (10) and passing through the swivel axis (A), in that the latch (22) is biased towards the latching members (21) by spring force (24), and in that the release member is formed by an actuating lever (26), swivably mounted on the carrier (12), which when actuated engages the latch (22) and under the effect of an acceleration, by means of which the latch is swivelled in the direction of the latching members (21), is released from the latch (22).

2. A device as set forth in claim 1, characterized in that the latch (22) is swivably supported on the carrier (12) by its end facing away from the guide rail (10).

3. A device as set forth in claim 1 or claim 2, characterized in that the latching members (21) protrude from the flat bottom wall of the guide rail (10) into the interior space thereof and in that the latch (22) is maintained in contact with the inner surface of the bottom wall of the guide rail (10) by the spring force (24).

4. A device as set forth in any of the claims 2 and 3, characterized in that the latch (22) features a generally L-shaped part the free end of its long arm (22a) bearing on the carrier (12) and carrying at the end of its short arm (22b) formed curved towards the bottom of the guide rail (10) a latching projection (22c) curved slanting towards the bottom of the guide rail, at the free end of which a latching edge (22d) is formed.

## Revendications

1. Dispositif de réglage en hauteur d'une ferrure de ceinture de sécurité de véhicules, comprenant une glissière de guidage à absorption de charge (10) qui est destinée à être fixée au véhicule et qui comporte plusieurs éléments d'encliquetage (21) espacés dans sa direction longitudinale, comprenant un support (12) qui est logé coulissant dans cette glissière de guidage (10) et sur lequel est fixée la ferrure de ceinture de sécurité, un verrou (22) qui peut être bloqué sélectivement dans les éléments d'encliquetage (21) et qui est monté sur le support, et un élément de déclenchement (26) dont l'actionnement permet de dégager le verrou (22) de l'élément d'encliquetage (21) respectif, caractérisé en ce que le verrou (22) est monté sur le support (12) de manière à pouvoir pivoter autour d'un axe de pivotement (A) au moins approximativement horizontal et son centre de gravité (S) est décalé vers le côté de la glissière de guidage (10) par rapport à un plan (E) qui est parallèle à la glissière de guidage et qui passe par l'axe de pivotement (A), en ce que le verrou (22) est sollicité par une force élastique (24) en direction des éléments d'encliquetage (21), et en ce que l'élément de déclenchement est formé par un levier d'actionnement (26) qui est monté pivotant sur le support (12) et qui, lorsqu'il est actionné, agit sur le verrou (22) et, sous l'effet d'une accélération par laquelle le verrou (22) pivote en direction des éléments d'encliquetage (21), se détache du verrou (22).

2. Dispositif selon la revendication 1, caractérisé en ce que l'extrémité du verrou (22) opposée à la glissière de guidage (10) prend appui sur le support (12) de manière pivotante.

3. Dispositif selon l'une des revendications 1 et 2, caractérisé en ce que les éléments d'encliquetage (21) font saillie dans la cavité intérieure de la glissière de guidage (10) à partir de la paroi de fond plate de celle-ci, et le verrou (22) est maintenu par la force élastique (24) appliqué contre la face intérieure de la paroi de fond de la glissière de guidage (10).

4. Dispositif selon l'une des revendications 2 et 3, caractérisé en ce que le verrou (22) comporte une partie en forme générale de L qui, au niveau de l'extrémité libre de sa branche longue (22a), prend appui sur le support (12) et, au niveau de l'extrémité de sa branche courte (22b) repliée vers le fond de la glissière de guidage (10), porte un appendice d'encliquetage (22c) qui est replié en biais vers le fond de la glissière de guidage et à l'extrémité libre duquel est formé un bord d'encliquetage (22d).
